# EUROPEAN PATENT APPLICATION

(11) **EP 4 803 862 A1**
(43) Date of publication of application: **09.09.2026**
(21) Application number: 26153945.6
(22) Date of filing: 23.01.2026
(51) Int. Cl.: G01C 21/20, G05D 1/644, G05D 1/648, G06Q 10/047, G01C 21/00, G01C 21/34, E02F 9/20

(54) **SYSTEM AND METHOD FOR DETERMINING ENTRY AND EXIT EDGES OF A WORKSITE FOR A MACHINE**

(30) Priority: 18.02.2025 IN 202511013980
(71) Applicant: Caterpillar, Inc., Peoria, IL 61629-6450 (US)
(72) Inventor: BALWAL, Ujjwel, 182101 Udhampur (IN); DEENATHAYALAN, Manivannan, 641041 Coimbatore (IN)
(74) Representative: Boult Wade Tennant LLP

(57) **Abstract**

A system (150) for controlling movement of a machine (100) is described. The system includes a controller (156) configured to receive a virtual map (200) corresponding to a worksite (104), determine an outline (202) of the virtual map, and generate a polygon (204) based on outline. The controller is configured to segment the polygon into Voronoi regions (212), determine a centerline (222) and centerline branches (218), assign weights (240), and determine all-pair shortest paths. The controller is configured to identify a first longest path (254) between a first exterior vertex (224f) and a second exterior vertex (224c) and a second longest path (256) between a third exterior vertex (224a) and a fourth exterior vertex (224d), pair first exterior vertex with third exterior vertex and second exterior vertex with fourth exterior vertex, identify one of an edge (250a, 250b) as the entry edge (260) and the other edge as the exit edge (262), and control movement of the machine along a longest traversable path between the entry edge and the exit edge.

## Description

### Technical Field

The present disclosure relates to a system and a method for performing path planning for time and cost-efficient movement of a machine on a given worksite. More particularly, the present disclosure relates to determining an entry edge and an exit edge for the machine to travel along the longest traversable paths within the worksite.

### Background

Machines, such as compactors, are frequently employed for compacting soil, gravel, freshly laid asphalt, and other work materials, on worksites, during activities such as construction of roadways, highways, and parking lots. To ensure a sufficient compaction level, the compactors may be required to travel across the worksite in a desired manner. Depending on a size and configuration of the worksite, different traversable paths may be taken by the compactor based on an operator's judgement and perception of what an optimum time and cost would be to complete a compaction job on the worksite. Excessively stopping and reversing the machine, such as when shortest traversable paths are taken by the machine, to cover the worksite typically leads to higher fuel consumption, duplication of operator efforts, besides incurring additional cost and time to complete the compaction job.

### Summary

In one aspect, the present disclosure relates to a system for controlling movement of a machine. The system includes a controller configured to receive a virtual map corresponding to a worksite, determine an outline of the virtual map, and generate a polygon based on the outline. The controller is further configured to segment the polygon into a plurality of Voronoi regions, determine a centerline and a plurality of centerline branches based on one or more boundaries shared between the plurality of Voronoi regions, and determine a plurality of exterior vertices subtended by each centerline branch from the plurality of centerline branches with corresponding vertices of the polygon. Further, the controller is configured to assign weights to each segment of the centerline and each centerline branch of the plurality of centerline branches based on a length of the respective centerline segment and centerline branch to create a weighted graph and determine all-pair shortest paths between the plurality of exterior vertices along one or more centerline branches of the plurality of centerline branches using Floyd-Warshall method. The controller is further configured to identify a first longest path from the all-pair shortest paths between a first exterior vertex and a second exterior vertex of the plurality of exterior vertices and a second longest path, penultimate to the first longest path, from the all-pair shortest paths between a third exterior vertex and a fourth exterior vertex of the plurality of exterior vertices. Furthermore, the controller is configured to pair the first exterior vertex with the third exterior vertex and the second exterior vertex with the fourth exterior vertex closest endpoints to define a first edge and a second edge respectively of the polygon, and identify one of the first edge and the second edge as an entry edge and the other of the first edge and the second edge as an exit edge for the machine with respect to the worksite. The controller is configured to control the movement of the machine along a longest traversable path between the entry edge and the exit edge of the worksite.

In another aspect, the present disclosure is directed to a computer implemented method for determining an entry edge and an exit edge of a worksite for a machine. The method includes receiving, by a controller, a virtual map corresponding to the worksite and determining, by the controller, an outline of the virtual map. The method further includes generating, by the controller, a polygon based on the outline and segmenting, by the controller, the polygon into a plurality of Voronoi regions. Further, the method includes determining, by the controller, a centerline and a plurality of centerline branches based on one or more boundaries shared between the plurality of Voronoi regions and determining, by the controller, a plurality of exterior vertices subtended by each centerline branch from the plurality of centerline branches with corresponding vertices of the polygon. Furthermore, the method includes assigning, by the controller, weights to each segment of the centerline and each centerline branch of the plurality of centerline branches based on a length of the respective centerline segment and centerline branch to create a weighted graph and determining, by the controller, all-pair shortest paths between the plurality of exterior vertices along one or more centerline branches of the plurality of centerline branches using Floyd-Warshall method. Further, the method includes identifying, by the controller, a first longest path from the all-pair shortest paths between a first exterior vertex and a second exterior vertex of the plurality of exterior vertices and a second longest path, penultimate to the first longest path, from the all-pair shortest paths between a third exterior vertex and a fourth exterior vertex of the plurality of exterior vertices and pairing, by the controller, the first exterior vertex with the third exterior vertex and the second exterior vertex with the fourth exterior vertex closest endpoints to define a first edge and a second edge respectively of the polygon. The method further includes identifying, by the controller, one of the first edge and the second edge as the entry edge and the other of the first edge and the second edge as the exit edge for the machine with respect to the worksite.

In yet another aspect, the present disclosure relates to one or more non-transitory computer-readable media comprising computer-executable instructions that, when executed, cause a controller to perform a method for determining an entry edge and an exit edge of a worksite for a machine. The method includes receiving a virtual map corresponding to the worksite, determining an outline of the virtual map, and generating a polygon based on the outline. The method further includes segmenting the polygon into a plurality of Voronoi regions and determining a centerline and a plurality of centerline branches based on one or more boundaries shared between the plurality of Voronoi regions. Further, the method includes determining a plurality of exterior vertices subtended by each centerline branch from the plurality of centerline branches with corresponding vertices of the polygon, and assigning weights to each segment of the centerline and each centerline branch of the plurality of centerline branches based on a length of the respective centerline segment and centerline branch to create a weighted graph. Furthermore, the method includes determining all-pair shortest paths between the plurality of exterior vertices along one or more centerline branches of the plurality of centerline branches using Floyd-Warshall method and identifying a first longest path from the all-pair shortest paths between a first exterior vertex and a second exterior vertex of the plurality of exterior vertices and a second longest path, penultimate to the first longest path, from the all-pair shortest paths between a third exterior vertex and a fourth exterior vertex of the plurality of exterior vertices. The method further includes pairing the first exterior vertex with the third exterior vertex and the second exterior vertex with the fourth exterior vertex closest endpoints to define a first edge and a second edge respectively of the polygon and identifying one of the first edge and the second edge as the entry edge and the other of the first edge and the second edge as the exit edge for the machine with respect to the worksite.

### Brief Description of the Drawings

FIG. 1 illustrates an exemplary machine for performing tasks at a worksite, in accordance with an embodiment of the present disclosure;
FIG. 2 illustrates a planar view of the worksite, in accordance with an embodiment of the present disclosure;
FIG. 3 illustrates a system for controlling movement of the machine on the worksite, in accordance with an embodiment of the present disclosure;
FIG. 4 illustrates a virtual map of the worksite, in accordance with an embodiment of the present disclosure;
FIG. 5 illustrates an outline of the virtual map, in accordance with an embodiment of the present disclosure;
FIG. 6 illustrates segmentation of a polygon into a plurality of Voronoi regions, in accordance with an embodiment of the present disclosure;
FIG. 7 illustrates a centerline and centerline branches of the polygon, in accordance with an embodiment of the present disclosure;
FIG. 8 illustrates a plurality of exterior vertices and a plurality of interior vertices of the centerline branches, in accordance with an embodiment of the present disclosure;
FIG. 9 illustrates a weighted graph with weights assigned to the centerline and the centerline branches, in accordance with an embodiment of the present disclosure;
FIG. 10 illustrates a first longest path between a first exterior vertex and a second exterior vertex, in accordance with an embodiment of the present disclosure;
FIG. 11 illustrates a second longest path between a third exterior vertex and a fourth exterior vertex, in accordance with an embodiment of the present disclosure;
FIG. 12 illustrates an entry edge and an exit edge of the worksite, in accordance with an embodiment of the present disclosure;
FIG. 13 illustrates segmentation of the outline when the outline includes an arcuate portion, in accordance with an embodiment of the present disclosure;
FIG. 14 illustrates segmentation of the outline when the outline includes an arcuate portion, in accordance with another embodiment of the present disclosure;
FIG. 15 illustrates longest traversable paths taken by the machine within the worksite, in accordance with an embodiment of the present disclosure; and
FIG. 16 is a flowchart illustrating an exemplary computer implemented method for determining the entry edge and the exit edge of the worksite for the machine, in accordance with an embodiment of the present disclosure.

### Detailed Description

Reference will now be made in detail to specific embodiments or features, examples of which are illustrated in the accompanying drawings. Generally, corresponding reference numbers may be used throughout the drawings to refer to the same or corresponding parts, e.g., 1, 1', 1", 101 and 201, could refer to one or more comparable components used in the same or different depicted embodiments.

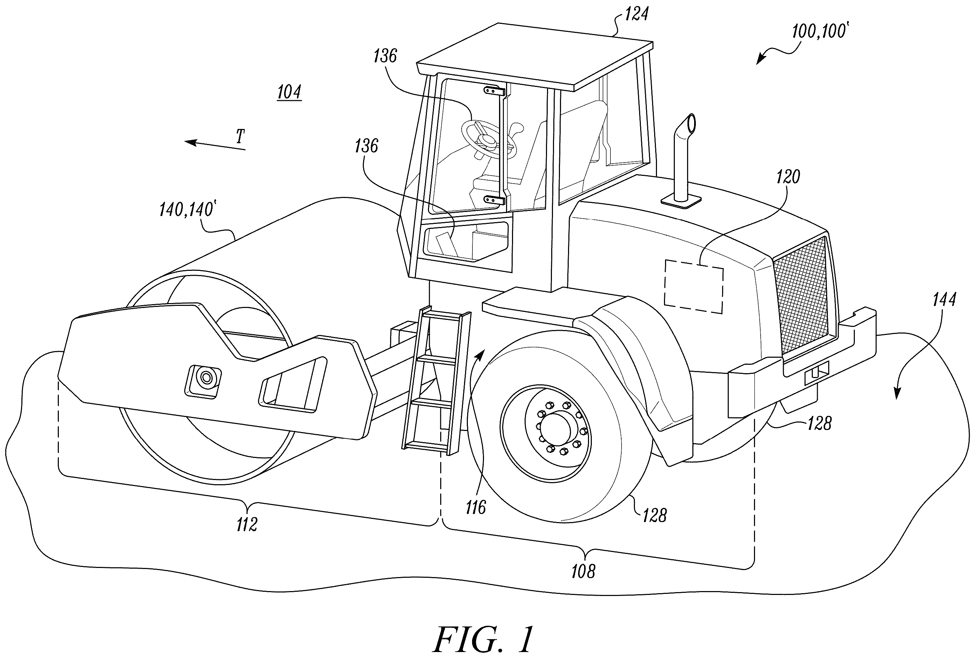

Referring to FIG. 1, a machine 100 is described. The machine 100 may be any autonomous machine configured to perform one or more tasks at a worksite 104. The machine 100 may be applied at the worksite 104, such as a mining site, a construction site, a quarry, a landfill, or any other worksite known to persons skilled in the art. The machine 100 may include various sections, such as a power end 108 and an implement end 112, as shown. The power end 108 may correspond to a section of the machine 100 where power to accomplish one or more tasks of the machine 100 may be produced. As an example, the power end 108 of the machine 100 may include a chassis 116, a power source 120, an operator station 124, and a set of traction devices 128. The power end 108 of the machine 100 may include various other devices, sub-systems, and/or components, but they are not exhaustively listed here as they may be contemplated by those of skill in the art.

The power source 120 may be supported on the chassis 116. The power source 120 may include one or more of an internal combustion engine (e.g., that may produce power by combusting fossil fuels) and/or an electrical power source such as a battery (e.g., that may produce electrical power by way of a chemical reaction). Although the above exemplary power sources are discussed, other power sources now known or in the future developed may be applied. As with the power source 120, the operator station 124 may be supported over a portion of the chassis 116, as well.

The operator station 124 may include or house one or more input devices 136 to control the power source 120 and/or an implement 140 associated with the implement end 112 of the machine 100. The input devices 136 may include one or more of a joystick, a control panel, a lever, and the like. Moreover, the traction devices 128 may be powered by the power source 120 to movably support the chassis 116 (and thus the machine 100) over a ground surface 144 on the worksite 104.

The implement end 112 of the machine 100 may be a section of the machine 100, separate from the power end 108, and which may include an implement (e.g., the implement 140 noted above). The implement 140 may be applied to carry out machine operations, e.g., involving an engagement with the ground surface 144. As an example, the implement 140 includes a compactor drum 140', and the machine 100 may accordingly include or correspond to a compactor 100', e.g., a soil compactor, as exemplary shown in FIG. 1. The implement 140 may be configured to contact the ground surface 144 to alter, e.g., to grade and/or compact, the ground surface 144 during a movement of the machine 100 over the ground surface 144, e.g., along direction, *T*. Although the machine 100 is described as a compactor 100', the machine 100 is not limited to the compactor 100' and may include any other work machine such as, an excavator, a haul truck, a dozer, a loader, and other mobile machines known in the art, having similar sub-systems for execution of tasks. The tasks may be associated with altering geography at the worksite 104 and may include, but are not limited to, dozing tasks, hauling tasks, dumping tasks, loading tasks, and the like.

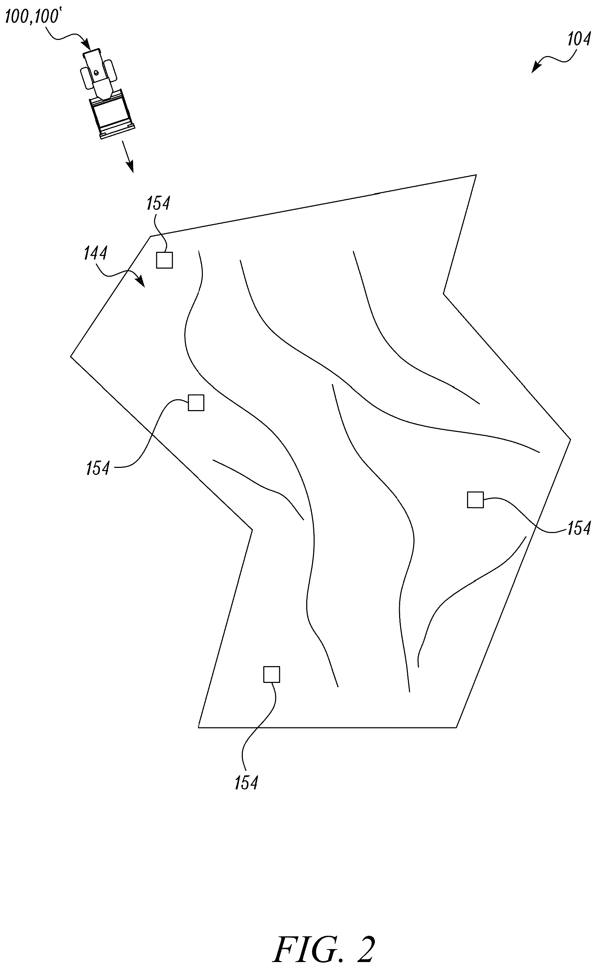

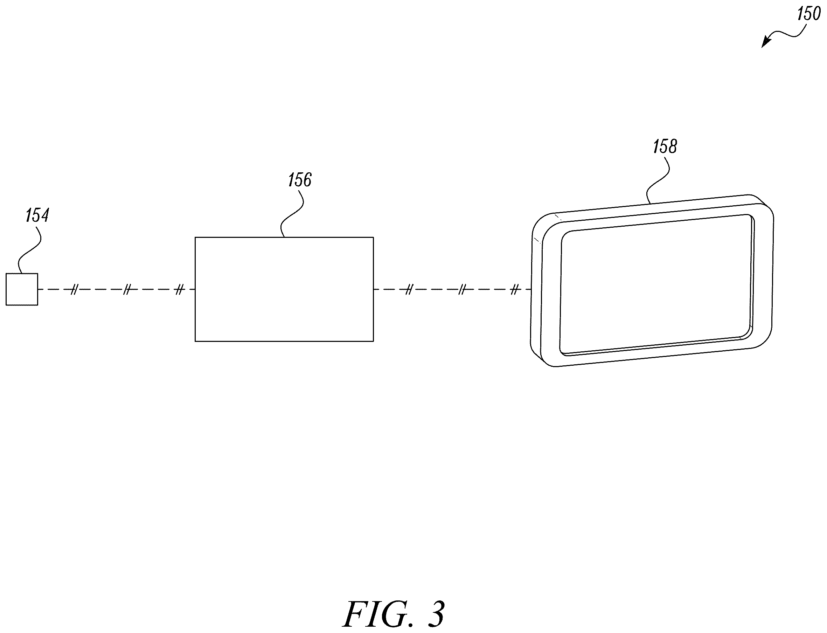

Referring now to FIG. 2, the worksite 104 will now be discussed. The worksite 104 may include different types of terrains requiring different compaction. For example, a terrain having soft, loose soil surface may require higher compaction as compared to a soil surface having higher density. Depending on a size and configuration of the worksite, different traversable paths may be taken by the machine 100 based on operator's judgement and perception. To optimally utilize the machine 100 and prevent unnecessary stopping/reversing of the machine 100, it is necessary to identify an entry edge and an exit edge of the worksite 104 for the machine 100 such that longest traversable paths are taken by the machine 100 to cover the worksite 104. FIG. 3 illustrates a system 150 for controlling movement of the machine 100.

Referring now to FIG. 3, a system 150 for controlling the movement of the machine 100 (shown in FIGS. 1 and 2) is discussed. The system 150 includes one or more sensors 154, a controller 156, and a display device 158. The controller 156 may be located at the worksite 104 or at any location remote to the worksite 104. The controller 156 may be communicatively coupled to the sensors 154 and the display device 158. The system 150 is discussed in conjunction with FIGS. 1 - 2 and 4 - 15.

The sensors 154 may be configured to measure three-dimensional profile or topography of the terrain of the worksite 104 and generate profile data indicative of the profile of the worksite 104. In an example, the sensors 154 may be configured to generate the profile data in the form of a point cloud of the terrain of the worksite 104. The sensors 154 may be positioned on and/or mounted on one of more infrastructures of the worksite 104. Alternatively, as shown in FIG. 2, the sensors 154 may include standalone units positioned on or about the ground surface 144 of the worksite 104. The sensors 154 may include LIDAR (light detection and ranging) devices (e.g., a laser scanner), RADAR, (radio detection and ranging) devices, SONAR (sound navigation and ranging) devices, camera devices, drones, and/or another types of devices to determine the profile data of the worksite 104.

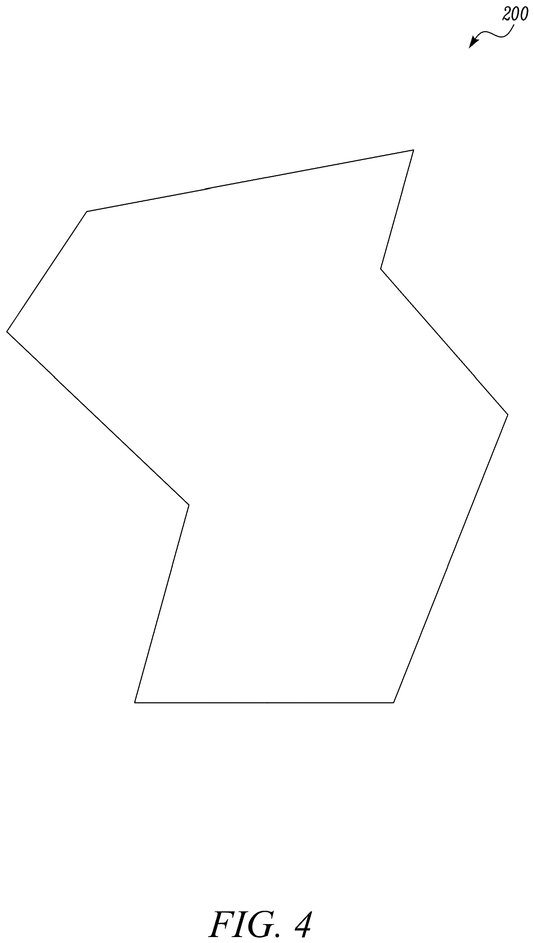

Referring back to FIG. 3, the controller 156 may be configured to receive the profile data from the sensors 154 and generate the virtual map (for example, the virtual map 200 shown in FIG. 4) of the worksite 104 based on the received profile data. In an example, the controller 156 may be configured to process the profile data, such as, by extrapolation between points of the point cloud, to create the virtual map 200 of the worksite 104. The controller 156 may be configured to store the virtual map 200 in a memory (not shown) of the controller 156. A scale or size of the virtual map 200 may be directly proportional to the actual size of the worksite 104, and may depend on the preference of a user, for example, an operator. In some embodiments (not shown), the virtual map 200 may be generated by any controller (not shown) based on the profile data and transmitted to the controller 156 for further operations discussed below. Further, in case, the profile data of the worksite 104 is already available, the controller 156 may be configured to obtain the profile data via a wired or wireless connection from a storage device (not shown).

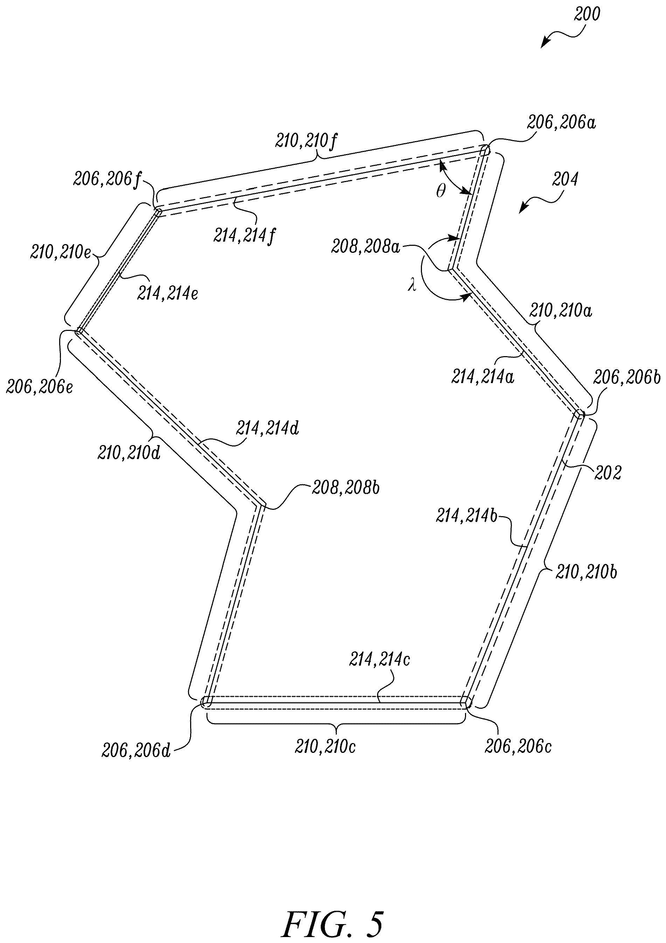

Upon receiving the virtual map 200, the controller 156 may be configured to determine an outline of the virtual map. For example, as discussed above, the controller 156 may receive the virtual map 200 from another controller or from the memory of the controller 156. For example, FIG. 5 illustrates an outline 202 of the virtual map 200 (shown in FIG. 4). To this end, the controller 156 may be configured to employ one or more edge detection algorithms to analyze the virtual map 200 and determine the outline 202 of the virtual map 200. It will be appreciated by persons skilled in the art that the determination of an outline of a map using edge detection algorithms is known in the art and is not described here for the sake of brevity.

The controller 156 may be configured to generate a polygon based on the outline 202 and segment the polygon into a plurality of Voronoi regions. To this end, the controller 156 may be configured to process the outline 202 of the virtual map 200 to determine a count of vertices of the outline 202 and whether the outline 202 includes any arcuate portion or not. For example, the controller 156 may employ the edge detection algorithms to determine the count of vertices of the outline 202 and a presence or absence of any arcuate portion in the outline 202.

When the outline 202 of the virtual map 200 does not include any arcuate portion and has at least 4 vertices, the controller 156 may be configured to generate the polygon by identifying the outline 202 as the polygon. For example, FIG. 5 identifies the outline 202 as the polygon 204 without any arcuate portion and having more than four (4) vertices (i.e., 206a, 206b, 206c, 206d, 206e, 206f, 208a, 208b).

Further, to segment the polygon 204, the controller 156 may be configured to identify one or more convex vertices and one or more concave vertices of the polygon 204. A convex vertex of the polygon 204 corresponds to a vertex where an interior angle (θ) formed by the two adjacent/consecutive sides of the respective polygon 204, partially spanning a portion of the polygon 204, is less than 180 degrees. A concave vertex of the polygon 204 corresponds to a vertex where an interior angle (λ) formed by the two adjacent/consecutive sides of the respective polygon 204, partially spanning a portion of the polygon 204, is greater than 180 degrees. To this end, the controller 156 may be configured to calculate the interior angle formed by the two adjacent/consecutive sides of the respective polygon 204 and identify the vertices with the interior angle (θ) less than 180 degrees as the convex vertices and the vertices with the interior angle (λ) greater than 180 degrees as the concave vertices. For example, FIG. 5 illustrates the convex vertices 206 (206a, 206b, 206c, 206d, 206e, 206f) with the interior angle θ less than 180 degrees and the concave vertices 208 (208a, 208b) with the interior angle λ greater than 180 degrees of the polygon 204.

Upon identifying the convex vertices 206 and the concave vertices 208, the controller 156 may be configured to section the polygon 204 at the one or more convex vertices 206 into a plurality of sections. To this end, the controller 156 may be configured to determine two (2) consecutive/adjacent convex vertices 206 of the polygon 204 and identify each portion of the outline 202 between the corresponding two (2) consecutive/adjacent convex vertices 206 as a section. For example, FIG. 5 illustrates sections 210 (210a, 210b, 210c, 210d, 210e, 210f) of the polygon 204 between two consecutive/adjacent convex vertices 206 of the polygon 204. In some embodiments, one or more sections 210 of the sections 210 may include one or more concave vertices 208 of the polygon 204. For example, as shown in FIG. 5, the section 210a formed between the convex vertices 206a and 206b includes the concave vertex 208a and similarly, the section 210d formed between the convex vertices 206d and 206e includes the concave vertex 208b.

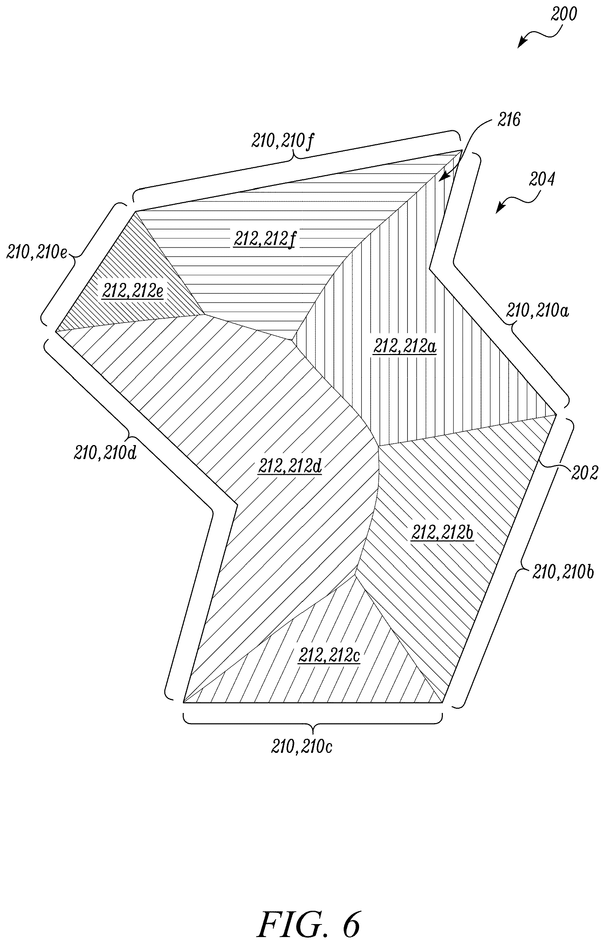

The controller 156 may be configured to identify each section 210a, 210b, 210c, 210d, 210e, 210f of the plurality of sections 210 as a corresponding side of the polygon 204. For example, as shown in FIGS. 5 and 6, each section 210a, 210b, 210c, 210d, 210e, 210f is identified as the corresponding side 214 (i.e., 214a, 214b, 214c, 214d, 214e, 214f) of the polygon 204.

The controller 156 may be further configured to segment a total area defined within the polygon 204 into the plurality of Voronoi regions, with each Voronoi region of the plurality of Voronoi regions being delimited by one or more sides 214a, 214b, 214c, 214d, 214e, 214f of the polygon 204. To this end, the controller 156 may be configured to partition the total area defined within the polygon 204 into regions based on a set of objects. The set of objects may correspond to the respective one or more sides 214a, 214b, 214c, 214d, 214e, 214f of the polygon 204. The controller 156 may be further configured to identify each partitioned area of the total area as a Voronoi region. For example, FIG. 6 illustrates the total area 216 within the polygon 204 segmented into the plurality of Voronoi regions 212 (i.e., 212a, 212b, 212c, 212d, 212e, 212f). As shown in FIG. 6, the Voronoi region 212a is determined based on the side 214a, the Voronoi region 212b is determined based on the side 214b, and so on). It would be appreciated by the persons skilled in the art that segmentation of an area into a plurality of Voronoi regions based on a set of objects, such as, sides 214, is known in the art, and is not described for the sake of brevity.

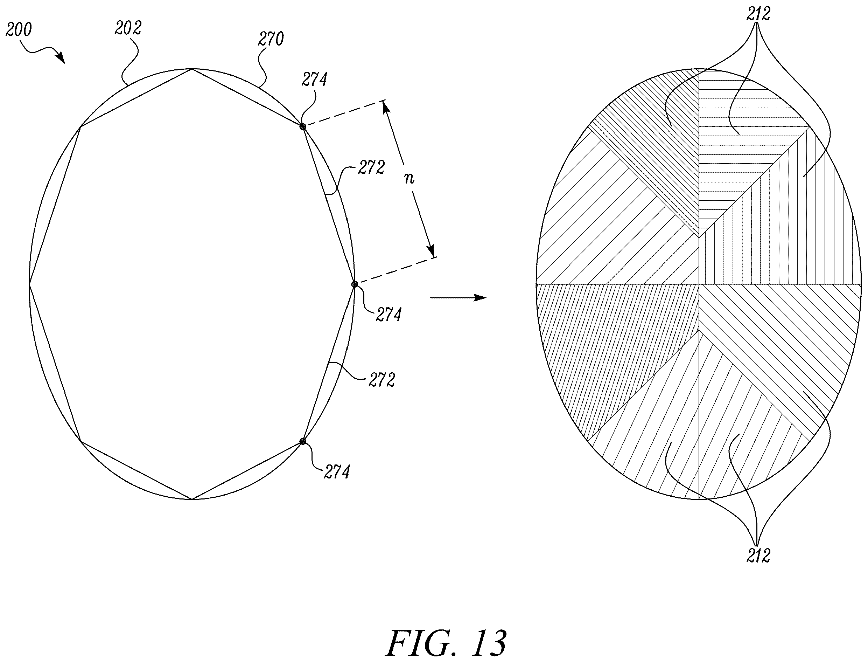

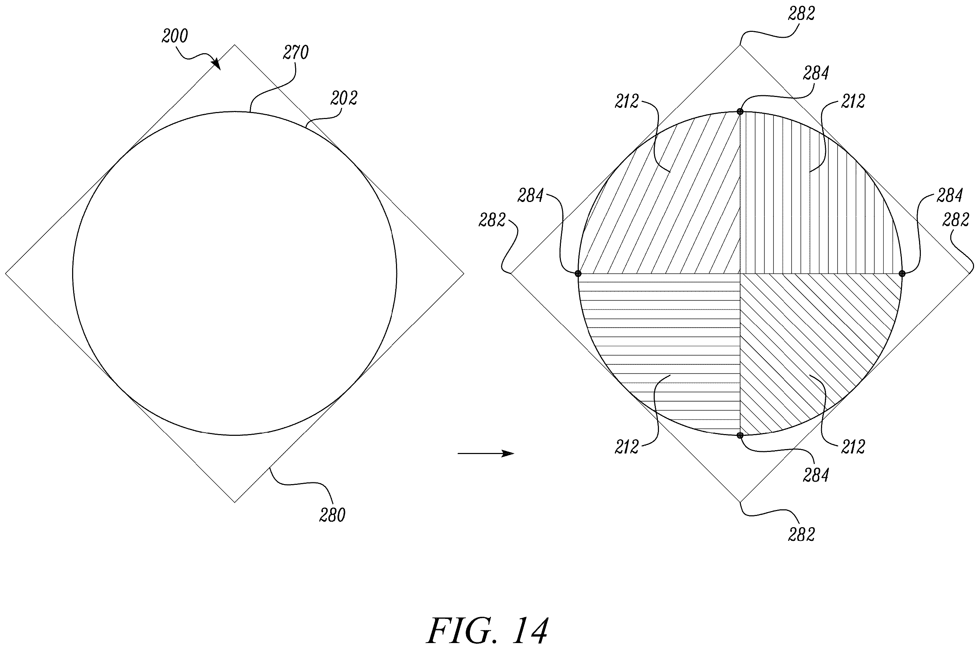

When the outline 202 of the virtual map 200 includes one or more arcuate portions (for example, the arcuate portion 270 shown in FIGS. 13 and 14), the controller 156 may be configured to segment the arcuate portions 270 into the plurality of Voronoi regions 212. As shown in FIGS. 13 and 14, an arcuate portion 270 of the one or more arcuate portions 270 may be in the form of a circular arc or an elliptical arc. In an embodiment shown in FIG. 13, the controller 156 may be configured to supplement the one or more arcuate portions 270 with one or more straight lines 272 of the polygon 204 and use an intersection point 274 between two consecutive straight lines 272 of the one or more straight lines 272 to segment the outline 202. As shown in FIG. 13, the one or more straight lines 272 are formed at predetermined intervals of distance of travel from a start point to an end point of the arcuate portion 270.

In another embodiment shown in FIG. 14, the controller 156 may be configured to enclose the outline 202 in a minimum rotated rectangle 280 and then map the vertices 282 of the minimum rotated rectangle 280 correspondingly to closest points 284 on the outline 202. The controller 156 may be further configured to segment the outline 202 based on the closest points 284. Although FIGS. 13 and 14 illustrate conversion of an elliptical arc to the polygon 204, it would be appreciated by persons skilled in the art that similar steps can be followed to convert a circular or any non-polygonal shaped worksite to create the polygon 204 e.g., hexagonal, decagonal, dodecagonal by introducing deformities in the boundary of the circular or the non-polygonal shaped worksite, as discussed above.

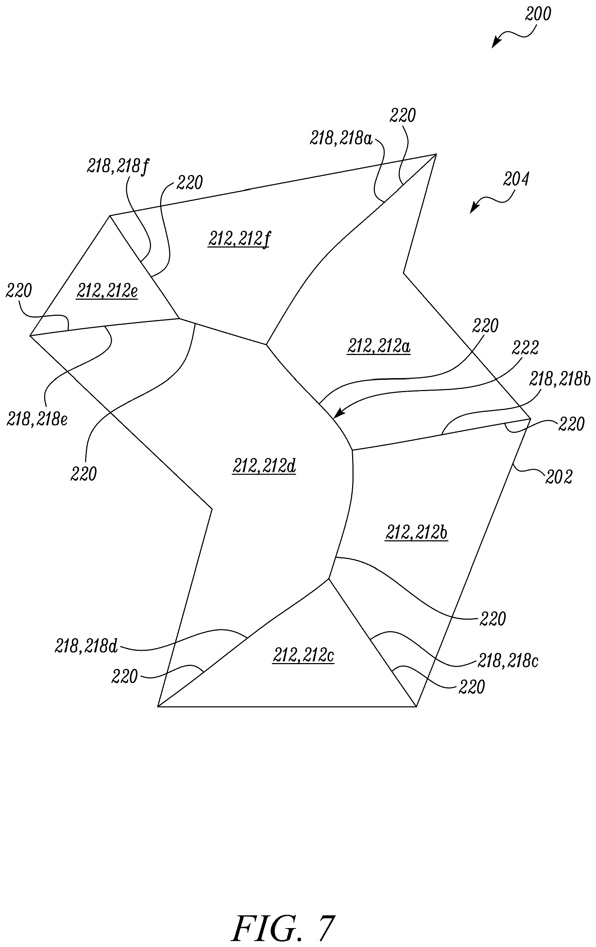

The controller 156 may be further configured to determine a centerline and a plurality of centerline branches from the centerline based on one or more boundaries shared between the plurality of Voronoi regions 212. The centerline corresponds to a central line running through the polygon 204 and defining a central structure of the polygon 204. The centerline branches correspond to individual smaller lines that split off from the centerline. The controller 156 may be configured to determine the centerline by computing a medial axis (representing the central structure) of the polygon 204 formed by the boundaries of the Voronoi regions 212. The controller 156 may be further configured to identify one or more branches of the centerline as the centerline branches formed by the boundaries of the Voronoi regions 212. For example, FIG. 7 identifies the centerline 222 and the centerline branches 218 (i.e., 218a, 218b, 218c, 218d, 218e, 218f) formed by the boundaries 220 of the Voronoi regions 212.

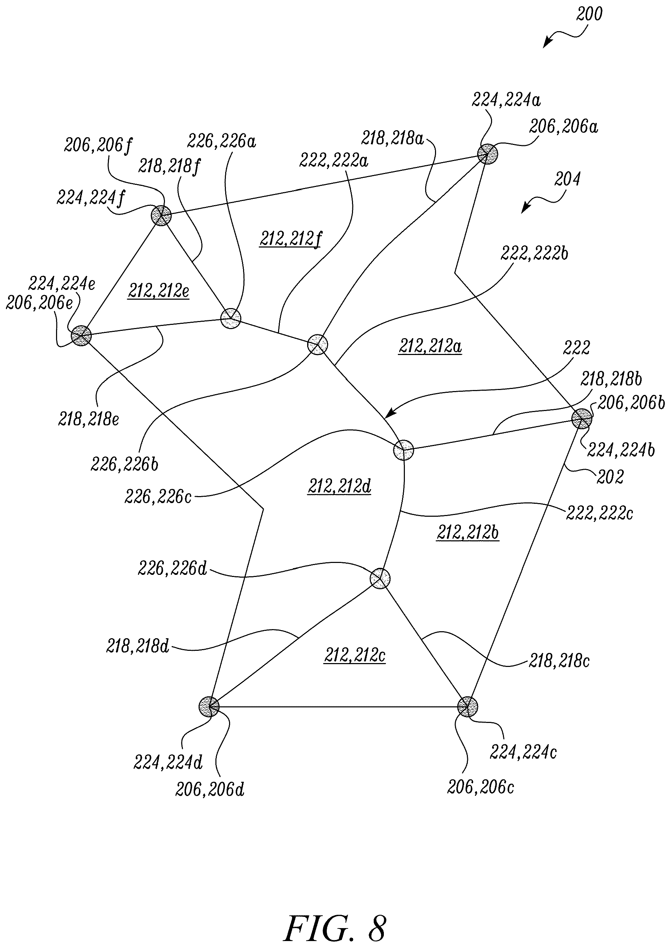

The controller 156 may be configured to determine a plurality of exterior vertices subtended by each centerline branch 218 from the plurality of centerline branches 218 with corresponding vertices 206a, 206b, 206c, 206d, 206e, 206f of the polygon 204. An exterior vertex of the centerline branch 218 may correspond to an end point of the corresponding centerline branch 218 subtended on the polygon 204 and is not shared with the centerline 222. The controller 156 may be configured to determine a plurality of interior vertices of the plurality of centerline branches 218. An interior vertex of the centerline branch 218 may correspond to an end point of the corresponding centerline branch 218 that overlaps the centerline 222 of the polygon 204 and is not shared with the polygon 204. To this end, the controller 156 may be configured to determine, for each centerline branch 218, the end points of the centerline branch 218, for example, using the edge detection algorithms and identify the end point subtended on the vertices 206a, 206b, 206c, 206d, 206e, 206f of the polygon 204 as the exterior vertex and the end point overlapping the centerline 222 as the interior vertex. For example, FIG. 8 illustrates the end points 224 of the centerline branches 218 subtended on the vertices 206a, 206b, 206c, 206d, 206e, 206f of the polygon 204 as the exterior vertices 224 (i.e., 224a, 224b, 224c, 224d, 224e, 224f), and the end points 226 of the centerline branches 218 overlapping the centerline 222 as the interior vertices 226 (i.e., 226a, 226b, 226c, 226d).

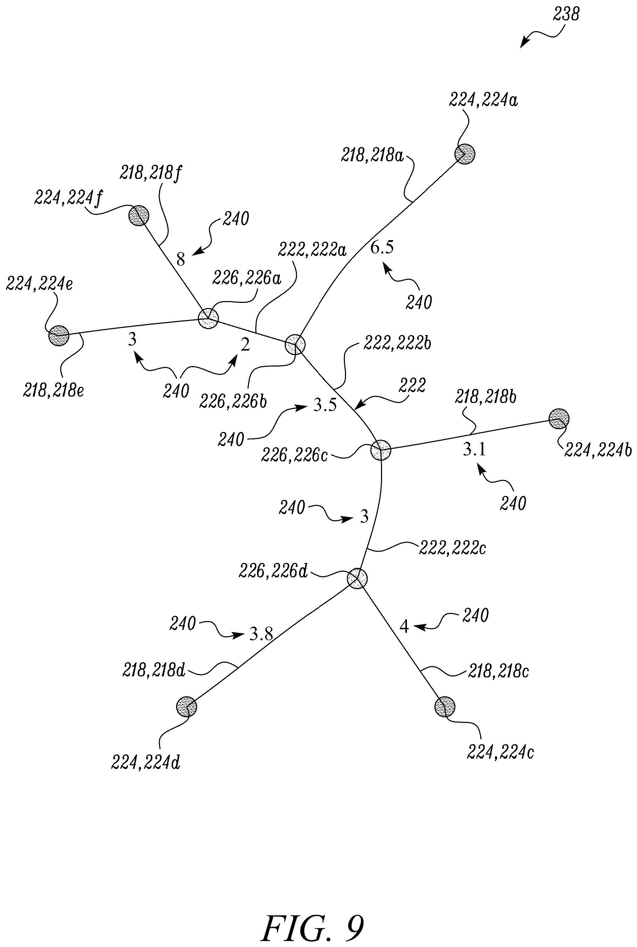

The controller 156 may be configured to assign weights to each segment of the centerline 222 and each centerline branch 218 of the plurality of centerline branches 218 based on a length of the respective centerline segment and the centerline branch 218 to create a weighted graph. To this end, the controller 156 may be configured to determine the length of each centerline branch 218 between the corresponding end points 224 and 226 and accordingly assign weights to each centerline branch 218 corresponding to the length of the respective centerline branch 218. Further, the controller 156 may be configured to segment the centerline 222 into a plurality of segments and assign weights to each segment corresponding to the length of the segment. For example, as shown in FIG. 8, the controller 156 may be configured to segment the centerline 222 into a first segment 222a between the interior vertices 226a and 226b, a second segment 222b between the interior vertices 226b and 226c, and a third segment 222c between the interior vertices 226c and 226d. For example, FIG. 9 illustrates a weighted graph 238 with exemplary weights 240 assigned to the centerline 222 and the centerline branches 218.

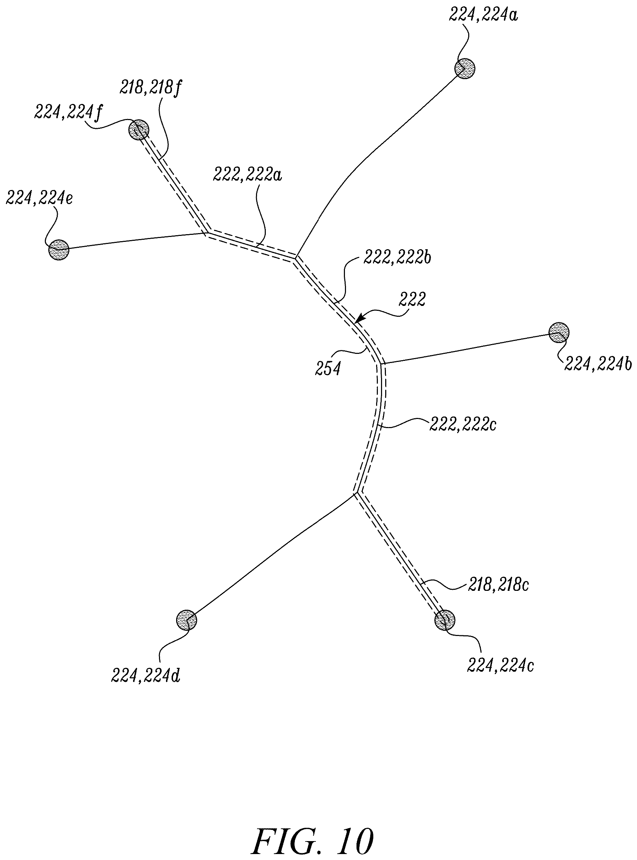

The controller 156 may be configured to determine all-pair shortest paths between the plurality of exterior vertices 224 along one or more of the centerline branches 218 and the centerline 222, for example, using Floyd-Warshall method, in the weighted graph 238. The shortest path between two exterior vertices 224 in the weighted graph 238 is a path that has the smallest total weight. To this end, the controller 156 may be configured to identify one or more paths between every pair of exterior vertices 224 by combining one or more centerline branches 218 and segments 222a, 222b, 222c of the centerline 222. For example, the controller 156 may be configured to identify a path 254 between the exterior vertices 224f and 224c by combining the centerline branches 218f and 218c with the segments 222a, 222b, and 222c (shown in FIG. 10). The controller 156 may be further configured to determine a total weight of each path in the weighted graph 238 by summing the individual weights assigned to the centerline branches 218 and the segments 222a, 222b, 222c forming the path. For example, the total weight assigned to the path 254 between the exterior vertices 224f and 224c can be determined by adding individual weights assigned to the centerline branches 218f and 218c and the segments 222a, 222b, and 222c. It would be appreciated by persons skilled in the art that determination of all-pair shortest paths using Floyd-Warshall method is well known in the art and is not described here for sake of brevity.

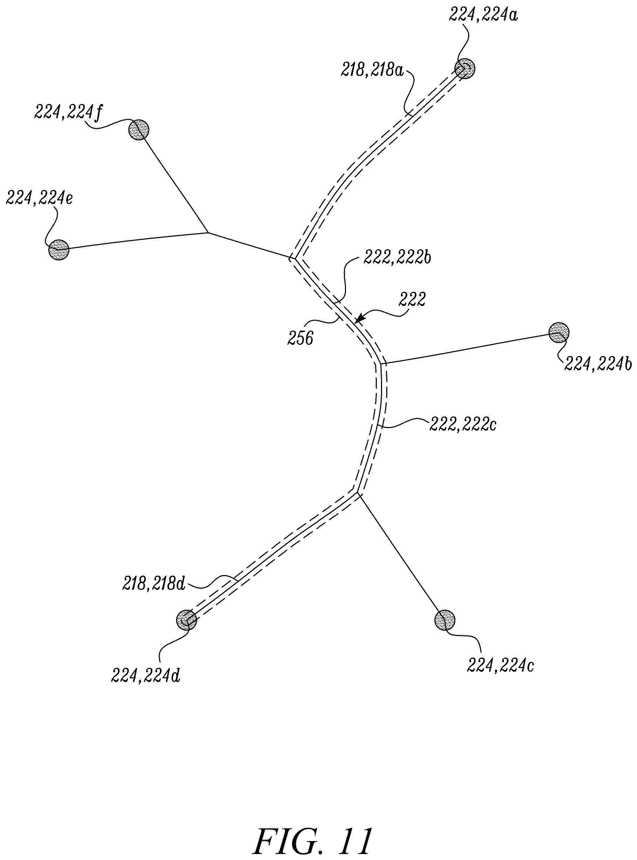

The controller 156 may be further configured to identify a first longest path from the all-pair shortest paths between a first exterior vertex 224 and a second exterior vertex 224 of the plurality of exterior vertices 224 and a second longest path, penultimate to the first longest path, from the all-pair shortest paths between a third exterior vertex 224 and a fourth exterior vertex 224 of the plurality of exterior vertices 224. The longest path corresponds to a path that has the largest total weight. To this end, the controller 156 may be configured to determine the first longest path with the largest total weight from the all-pair shortest paths between the plurality of exterior vertices 224. For example, as shown in FIG. 10, the first longest path 254 with the largest total weight may be between the first exterior vertex 224f and the second exterior vertex 224c. The controller 156 may be configured to identify a second longest path that is penultimate to the first longest path 254. The second longest path is identified such that the second longest path is between the third exterior vertex 224 and the fourth exterior vertex 224 (different from the first exterior vertex 224f and the second exterior vertex 224c). For example, FIG. 11 illustrates the second longest path 256 between the third exterior vertex 224a and the fourth exterior vertex 224d.

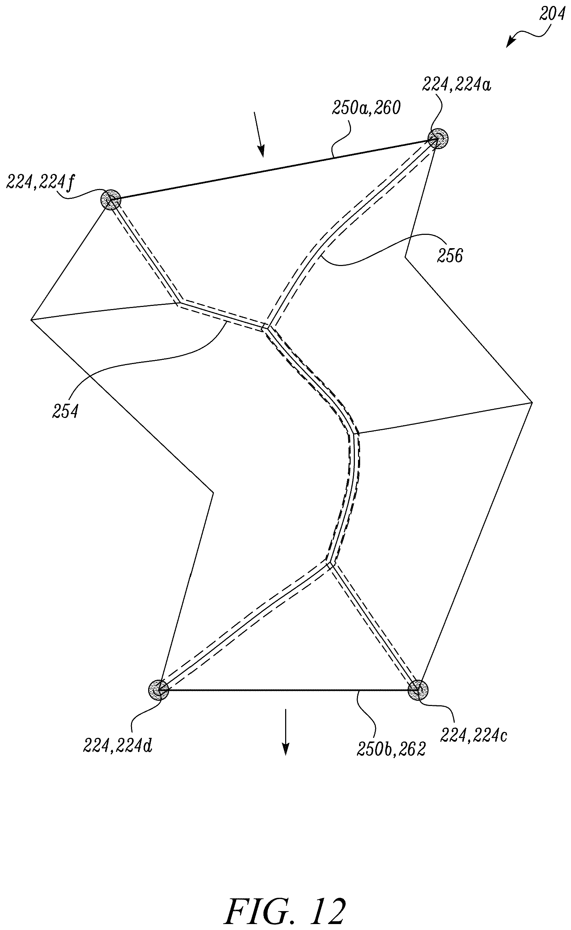

The controller 156 may be configured to pair the first exterior vertex 224f with the third exterior vertex 224a and the second exterior vertex 224c with the fourth exterior vertex 224d closest endpoints to define a first edge 250a and a second edge 250b respectively of the polygon 204. For example, FIG. 12 illustrates the first edge 250a formed by pairing the first exterior vertex 224f with the third exterior vertex 224a and the second edge 250b formed by pairing the second exterior vertex 224c with the fourth exterior vertex 224d. The controller 156 may be configured to identify one of the first edge 250a and the second edge 250b as the entry edge and the other of the first edge 250a and the second edge 250b as the exit edge for the machine 100 with respect to the worksite 104. For example, FIG. 12 illustrates identification of the first edge 250a as the entry edge 260 and the second edge 250b as the exit edge 262.

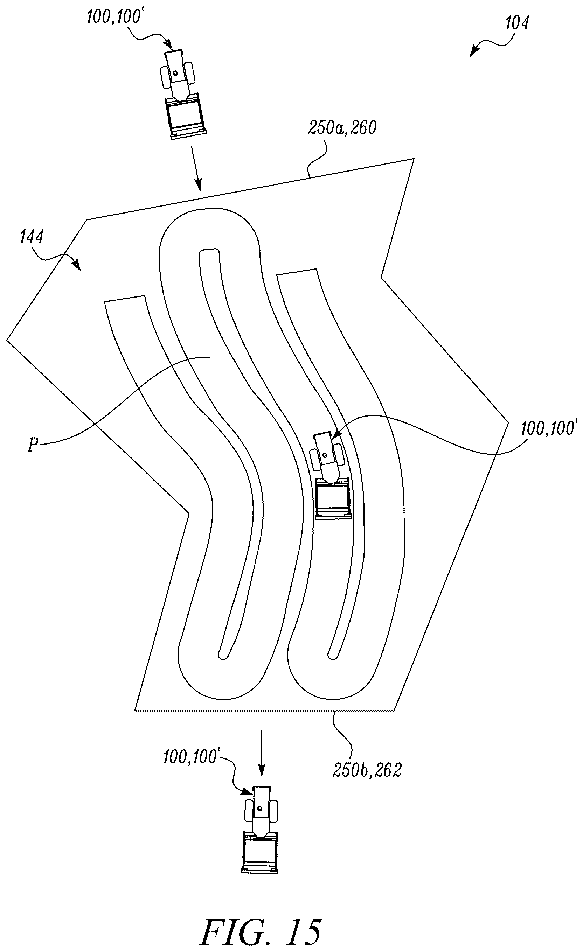

The controller 156 may be further configured to control the movement of the machine 100 to move into and out of the entry edge 260 and the exit edge 262 of the worksite 104 whilst along a longest traversable path between the entry edge 260 and the exit edge 262 of the worksite 104. To this end, the controller 156 may be configured to determine the longest traversable path between the entry edge 260 and the exit edge 262 of the worksite 104 and control the set of traction devices 128 of the machine 100 to travel along the longest traversable path. For example, the controller 156, based on the entry edge 260 and the exit edge 262, may determine that the machine 100 may travel along the longest traversable path, P, within the worksite 104 to perform compaction of the ground surface 144 (shown in FIG. 15).

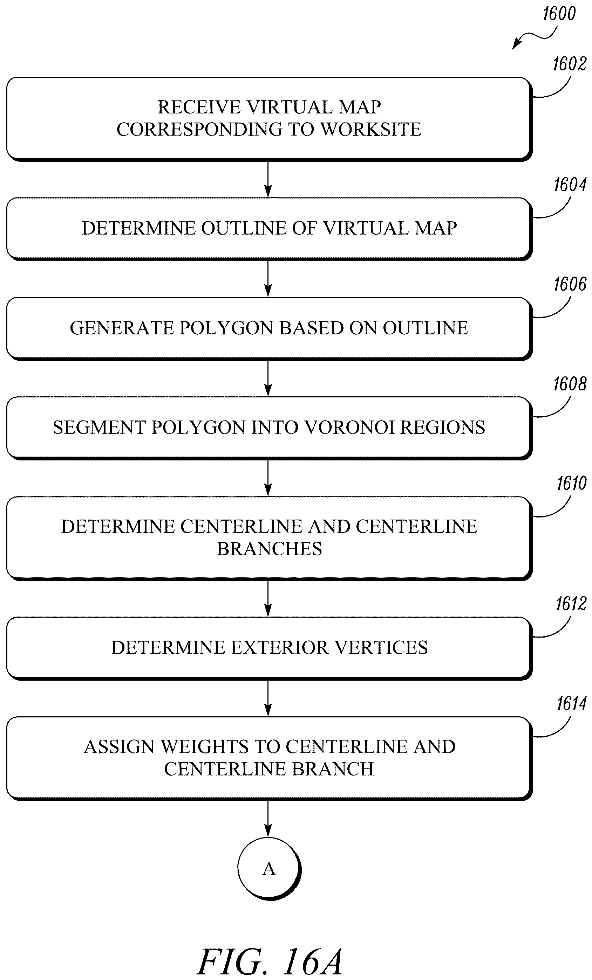

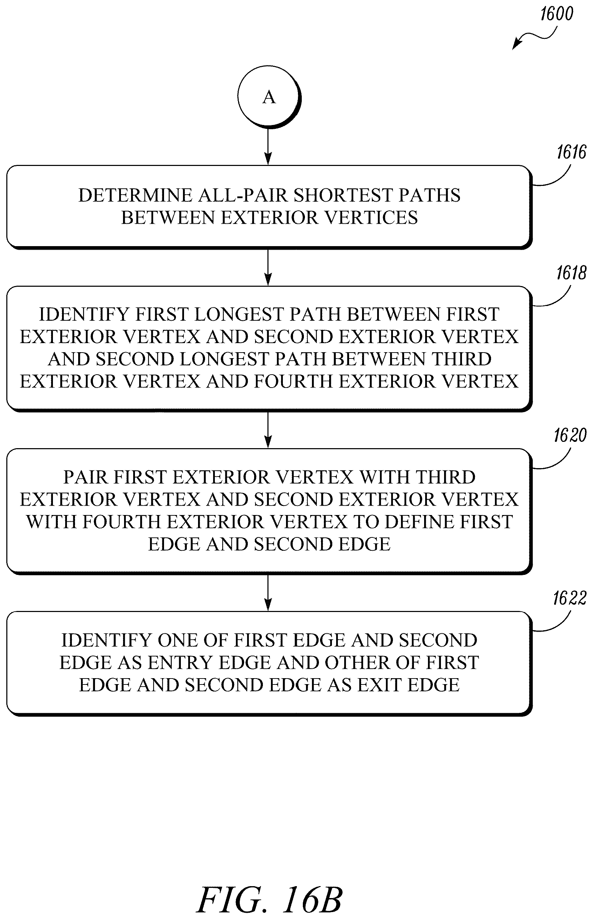

The controller 156 may be further configured to instruct the display device 158 to display the entry edge 260, the exit edge 262, and the longest traversable path, P, of the worksite 104 to the user, for example, the operator of the machine 100. The display device 158 may be positioned within the machine 100 and/or at the remote location from the machine 100. Although the system 150 has been explained in conjunction with the autonomous machine 100, the system 150 and/or the method 1600 (refer to FIG. 16) is equally, or similarly, applicable in cases where there are manually or semi-autonomously operated machines, wherein, or in which case, the system 150 may be designed to identify the entry edge 260, the exit edge 262, and the longest traversable path P therebetween and provide the same to the operator of the machine 100 via the display device 158 in order to enable the operator to then control a movement of the machine for following the longest traversable path *P*.

The controller 156 may be one or more processor, a microprocessor, a microcontroller, an electronic control module (ECM), an electronic control unit (ECU), or any other suitable means for performing the one or more operations described above. The controller 156 may be implemented using one or more controller technologies, such as Application Specific Integrated Circuit (ASIC), Reduced Instruction Set Computing (RISC) technology, Complex Instruction Set Computing (CISC) technology or any other similar technology now known or developed in the future.

The controller 156 may include a memory (not shown), for example, a hard disk drive (HDD) and a secure digital (SD) card. Further, the memory may include non-volatile/volatile memory units such as a random-access memory (RAM) / a read only memory (ROM), which may include associated input and output buses. The memory may be configured to store various other instructions sets for various other functions of the machine 100, along with the set of instructions, described above.

The controller 156 may include a transceiver (not shown). The transceiver may enable the controller 156 to communicate (e.g., wirelessly) with the sensors 154 and the display device 158, etc., over one or more of wireless radio links, infrared communication links, short wavelength ultra-high frequency radio waves, short-range high frequency waves, or the like. Example transceivers may include, but not limited to, wireless personal area network (WPAN) radios compliant with various IEEE 802.15 (Bluetooth^{™}) standards, wireless local area network (WLAN) radios compliant with any of the various IEEE 802.11 (WiFi^{™}) standards, wireless wide area network (WWAN) radios for cellular phone communication, wireless metropolitan area network (WMAN) radios compliant with various IEEE 802.15 (WiMAX^{™}) standards, and wired local area network (LAN) Ethernet transceivers for network data communication.

### Industrial Applicability

Referring to FIG. 16, an exemplary computer implemented method 1600 for determining the entry edge 260 and the exit edge 262 of the worksite 104 for the machine 100 is discussed. The method is discussed in conjunction with FIGS. 1 through 15.

The method 1600 begins with the controller 156 receiving the virtual map 200 corresponding to the worksite 104, at step 1602. At step 1604, the controller 156 determines the outline 202 of the virtual map 200. The controller 156, at step 1606, generates the polygon 204 based on the outline 202. At step 1608, the controller 156 segments the polygon 204 into the plurality of Voronoi regions 212. At step 1610, the controller 156 determines the centerline 222 and the plurality of centerline branches 218 based on one or more boundaries 220 shared between the plurality of Voronoi regions 212.

At step 1612, the controller 156 determines the plurality of exterior vertices 224 subtended by each centerline branch 218 from the plurality of centerline branches 218 with corresponding vertices 206 of the polygon 204. At step 1614, the controller 156 assigns the weights 240 to each segment 222a, 222b, 222c of the centerline 222 and each centerline branch 218a, 218b, 218c, 218d, 218e, 218f of the plurality of centerline branches 218 based on a length of the respective centerline segment 222a, 222b, 222c and centerline branch 218a, 218b, 218c, 218d, 218e, 218f to create a weighted graph 238. At step 1616, the controller 156 determines all-pair shortest paths between the plurality of exterior vertices 224 along one or more centerline branches 218 of the plurality of centerline branches 218 using Floyd-Warshall method. At step 1618, the controller 156 identifies the first longest path 254 from the all-pair shortest paths between the first exterior vertex 224f and the second exterior vertex 224c of the plurality of exterior vertices 224 and the second longest path 256, penultimate to the first longest path 254, from the all-pair shortest paths between the third exterior vertex 224a and the fourth exterior vertex 224d of the plurality of exterior vertices 224.

At step 1620, the controller 156 pairs the first exterior vertex 224f with the third exterior vertex 224a and the second exterior vertex 224c with the fourth exterior vertex 224d closest endpoints to define the first edge 250a and the second edge 250b respectively of the polygon 204. At step 1622, the controller 156 identifies one of the first edge 250a and the second edge 250b as the entry edge 260 and the other of the first edge 250a and the second edge 250b as the exit edge 262 for the machine 100 with respect to the worksite 104.

In an embodiment, one or more non-transitory computer-readable media may include computer executable instructions that, when executed cause the controller 156 to perform the method 1600 (shown in FIG. 16) for determining the entry edge 260 and the exit edge 262 of the worksite 104 for the machine 100.

Unless explicitly excluded, the use of the singular to describe a component, structure, or operation does not exclude the use of plural such components, structures, or operations or their equivalents. The use of the terms "a" and "an" and "the" and "at least one" or the term "one or more," and similar referents in the context of describing the disclosure (especially in the context of the following claims) are to be construed to cover both the singular and the plural, unless otherwise indicated herein or clearly contradicted by context. The use of the term "at least one" followed by a list of one or more items (for example, "at least one of A and B" or one or more of A and B") is to be construed to mean one item selected from the listed items (A or B) or any combination of two or more of the listed items (A and B; A, A and B; A, B and B), unless otherwise indicated herein or clearly contradicted by context. Similarly, as used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

It will be apparent to those skilled in the art that various modifications and variations can be made to the system, method, and/or the work machine of the present disclosure without departing from the scope of the disclosure. Other embodiments will be apparent to those skilled in the art from consideration of the specification and practice of the system, method, and/or the work machine disclosed herein. It is intended that the specification and examples be considered as exemplary only, with a true scope of the disclosure being indicated by the following claims and their equivalent.

## Claims

1. A system (150) for controlling movement of a machine (100), the system (150) comprising:
a controller (156) configured to:
receive a virtual map (200) corresponding to a worksite (104);
determine an outline (202) of the virtual map (200);
generate a polygon (204) based on the outline (202);
segment the polygon (204) into a plurality of Voronoi regions (212);
determine a centerline (222) and a plurality of centerline branches (218) based on one or more boundaries (220) shared between the plurality of Voronoi regions (212);
determine a plurality of exterior vertices (224) subtended by each centerline branch (218) from the plurality of centerline branches (218) with corresponding vertices (206) of the polygon (204);
assign weights (240) to each segment (222a, 222b, 222c) of the centerline (222) and each centerline branch (218) of the plurality of centerline branches (218) based on a length of the respective centerline segment (222a, 222b, 222c) and centerline branch (218) to create a weighted graph (238);
determine all-pair shortest paths between the plurality of exterior vertices (224) along one or more centerline branches (218) of the plurality of centerline branches (218) using Floyd-Warshall method;
identify a first longest path (254) from the all-pair shortest paths between a first exterior vertex (224f) and a second exterior vertex (224c) of the plurality of exterior vertices (224) and a second longest path (256), penultimate to the first longest path (254), from the all-pair shortest paths between a third exterior vertex (224a) and a fourth exterior vertex (224d) of the plurality of exterior vertices (224);
pair the first exterior vertex (224f) with the third exterior vertex (224a) and the second exterior vertex (224c) with the fourth exterior vertex (224d) closest endpoints to define a first edge (250a) and a second edge (250b) respectively of the polygon (204);
identify one of the first edge (250a) and the second edge (250b) as an entry edge (260) and the other of the first edge (250a) and the second edge (250b) as an exit edge (262) for the machine (100) with respect to the worksite (104); and
control the movement of the machine (100) along a longest traversable path between the entry edge (260) and the exit edge (262) of the worksite (104).

2. The system (150) as claimed in claim 1, wherein the controller (156) is configured to segment the polygon (204) into a plurality of Voronoi regions (212) by:
identifying one or more convex vertices (206) and one or more concave vertices (208) of the polygon (204);
sectioning the polygon (204) at the one or more convex vertices (206) into a plurality of sections (210);
identifying each section (210) of the plurality of sections (210) as a corresponding side (214) of the polygon (204); and
segmenting a total area (216) defined within the polygon (204) into the plurality of Voronoi regions (212), with each Voronoi region (212) of the plurality of Voronoi regions (212) being delimited by one or more sides (214) of the polygon (204).

3. The system (150) as claimed in claim 1, wherein when the outline (202) of the virtual map (200) includes one or more arcuate portions (270), the controller (156) is configured to segment by:
supplementing the one or more arcuate portions (270) with one or more straight lines (272) of the polygon (204); and
using an intersection point (274) between two consecutive straight lines (272) of the one or more straight lines (272) to segment the outline (202).

4. A computer implemented method (1600) for determining an entry edge (260) and an exit edge (262) of a worksite (104) for a machine (100), the method (1600) comprising:
receiving (1602), by a controller (156), a virtual map (200) corresponding to the worksite (104);
determining (1604), by the controller (156), an outline (202) of the virtual map (200);
generating (1606), by the controller (156), a polygon (204) based on the outline (202);
segmenting (1608), by the controller (156), the polygon (204) into a plurality of Voronoi regions (212);
determining (1610), by the controller (156), a centerline (222) and a plurality of centerline branches (218) based on one or more boundaries (220) shared between the plurality of Voronoi regions (212);
determining (1612), by the controller (156), a plurality of exterior vertices (224) subtended by each centerline branch (218) from the plurality of centerline branches (218) with corresponding vertices (206) of the polygon (204);
assigning (1614), by the controller (156), weights (240) to each segment (222a, 222b, 222c) of the centerline (222) and each centerline branch (218) of the plurality of centerline branches (218) based on a length of the respective centerline segment (222a, 222b, 222c) and centerline branch (218) to create a weighted graph (238);
determining (1616), by the controller (156), all-pair shortest paths between the plurality of exterior vertices (224) along one or more centerline branches (218) of the plurality of centerline branches (218) using Floyd-Warshall method;
identifying (1618), by the controller (156), a first longest path (254) from the all-pair shortest paths between a first exterior vertex (224f) and a second exterior vertex (224c) of the plurality of exterior vertices (224) and a second longest path (256), penultimate to the first longest path (254), from the all-pair shortest paths between a third exterior vertex (224a) and a fourth exterior vertex (224d) of the plurality of exterior vertices (224);
pairing (1620), by the controller (156), the first exterior vertex (224f) with the third exterior vertex (224a) and the second exterior vertex (224c) with the fourth exterior vertex (224d) closest endpoints to define a first edge (250a) and a second edge (250b) respectively of the polygon (204); and
identifying (1622), by the controller (156), one of the first edge (250a) and the second edge (250b) as the entry edge (260) and the other of the first edge (250a) and the second edge (250b) as the exit edge (262) for the machine (100) with respect to the worksite (104).

5. The method (1600) as claimed in claim 4, wherein segmenting the polygon (204) into a plurality of Voronoi regions (212) includes:
identifying, by the controller (156), one or more convex vertices (206) and one or more concave vertices (208) of the polygon (204);
sectioning, by the controller (156), the polygon (204) at the one or more convex vertices (206) into a plurality of sections (210);
identifying, by the controller (156), each section (210) of the plurality of sections (210) as a corresponding side (214) of the polygon (204); and
segmenting, by the controller (156), a total area (216) defined within the polygon (204) into the plurality of Voronoi regions (212), with each Voronoi region (212) of the plurality of Voronoi regions (212) being delimited by one or more sides (214) of the polygon (204).

6. The method (1600) as claimed in claim 4, wherein when the outline (202) of the virtual map (200) includes one or more arcuate portions (270), the segmentation includes:
supplementing, by the controller (156), the one or more arcuate portions (270) with one or more straight lines (272) of the polygon (204); and
using, by the controller (156), an intersection point (274) between two consecutive straight lines (272) of the one or more straight lines (272) to segment the outline (202).

7. The method (1600) as claimed in claim 6, wherein an arcuate portion (270) of the one or more arcuate portions (270) is in the form of a circular arc or an elliptical arc and wherein the one or more straight lines (272) are formed at predetermined intervals of distance of travel from a start point to an end point of the arcuate portion (270).

8. The method (1600) as claimed in claim 4, wherein the outline (202) of the virtual map (200) includes one or more arcuate portions (270) and wherein generating the polygon (204) includes:
enclosing, by the controller (156), the outline (202) in a minimum rotated rectangle (280);
mapping, by the controller (156), vertices (282) of the minimum rotated rectangle (280) correspondingly to closest points (284) on the outline (202); and
segmenting, by the controller (156), the outline (202) based on the closest points (284).

9. The method (1600) as claimed in claim 4, wherein each exterior vertex (224) of the plurality of exterior vertices (224) corresponds to an end point of the corresponding centerline branch (218) of the plurality of centerline branches (218) subtended on the polygon (204).

10. One or more non-transitory computer-readable media comprising computer-executable instructions that, when executed, cause a controller (156) to perform a method (1600) for determining an entry edge (260) and an exit edge (262) of a worksite (104) for a machine (100), the method (1600) comprising:
receiving a virtual map (200) corresponding to the worksite (104);
determining an outline (202) of the virtual map (200);
generating a polygon (204) based on the outline (202);
segmenting the polygon (204) into a plurality of Voronoi regions (212);
determining a centerline (222) and a plurality of centerline branches (218) based on one or more boundaries (220) shared between the plurality of Voronoi regions (212);
determining a plurality of exterior vertices (224) subtended by each centerline branch (218) from the plurality of centerline branches (218) with corresponding vertices (206) of the polygon (204);
assigning weights (240) to each segment (222a, 222b, 222c) of the centerline (222) and each centerline branch (218) of the plurality of centerline branches (218) based on a length of the respective centerline segment (222a, 222b, 222c) and centerline branch (218) to create a weighted graph (238);
determining all-pair shortest paths between the plurality of exterior vertices (224) along one or more centerline branches (218) of the plurality of centerline branches (218) using Floyd-Warshall method;
identifying a first longest path (254) from the all-pair shortest paths between a first exterior vertex (224f) and a second exterior vertex (224c) of the plurality of exterior vertices (224) and a second longest path (256), penultimate to the first longest path (254), from the all-pair shortest paths between a third exterior vertex (224a) and a fourth exterior vertex (224d) of the plurality of exterior vertices (224);
pairing the first exterior vertex (224f) with the third exterior vertex (224a) and the second exterior vertex (224c) with the fourth exterior vertex (224d) closest endpoints to define a first edge (250a) and a second edge (250b) respectively of the polygon (204); and
identifying one of the first edge (250a) and the second edge (250b) as the entry edge (260) and the other of the first edge (250a) and the second edge (250b) as the exit edge (262) for the machine (100) with respect to the worksite (104).
